# EUROPÄISCHE PATENTSCHRIFT

(11) **EP 1 092 699 B1**
(45) Veröffentlichungstag und Bekanntmachung des Hinweises auf die Patenterteilung: **26.11.2003**
(21) Anmeldenummer: 00122005.2
(22) Anmeldetag: 10.10.2000
(51) Int. Cl.: C05F 17/02, C05F 17/00

(54) **Umsetzvorrichtung für Rottgut einer Kompostmiete**
Transferring device for fermenting matter in compost heaps
Dispositif de transfert de matériaux en fermentation dans des andains de compost

(30) Priorität: 13.10.1999 DE 19949425; 10.12.1999 DE 29921712 U
(43) Veröffentlichungstag der Anmeldung: 18.04.2001
(73) Patentinhaber: Seiringer, Hubert, 3250 Wieselburg (AT)
(72) Erfinder: Seiringer, Hubert, 3250 Wieselburg (AT)
(74) Vertreter: Leitner, Waldemar, Dr. techn.

(56) Entgegenhaltungen:
- DE-A- 19 832 787
- DE-A- 19 907 022
- DATABASE EPODOC [Online] EUROPEAN PATENT OFFICE, THE HAGUE, NL; JONNINEN MARKKU (FI): XP002198809 -& FI 94 622 B (IDEACHIP OY) 30. Juni 1996 (1996-06-30)

## Beschreibung

Die Erfindung betrifft eine Umsetzvorrichtung für Rottgut einer Kompostmiete, insbesondere für eine Dreiecks- oder Trapezmiete, die mindestens eine Wendetrommel aufweist, durch die das Rottgut der Kompostmiete erfaßbar und entgegen einer Arbeitsrichtung der Umsetzvorrichtung zu einer Fördereinrichtung transportierbar ist, durch die das Rottgut zu einer quer zur Arbeitsrichtung der Umsetzvorrichtung arbeitenden Austrageeinrichtung transportierbar ist.

Eine derartige Umsetzvorrichtung ist bekannt und wird dazu verwendet, das Rottgut der Kompostmiete zu wenden und damit zu durchmischen und zu lockern, um durch diese einen wichtigen Teil der Bearbeitungstechnik von Kompostmieten darstellende Rottgut-Wendung dazu beizutragen, optimale Bedingungen für die Mikroben, welche den biologischen Abbau des organischen Kompostmaterials vollziehen, zu schaffen.

Das Rottgut wird hierbei entweder in sogenannten Dreiecks- oder Trapezmieten oder in Tafelmieten angeordnet. Charakteristisch für die erstgenannte Art von Kompostmieten ist, daß hierbei das gesamte Rottgut einer Kompostmiete in einem einzigen Arbeitsgang gewendet wird, während bei Tafelmieten vorgesehen ist, daß in mehrmaligen Arbeitsschritten schrittweise das Rottgut der Tafelmiete gewendet wird. Die zum Wenden des Rottguts von Dreiecks- oder Trapezmieten verwendeten, bekannten Umsetzvorrichtungen sind hierbei meist als selbstfahrende Maschinen ausgebildet, an deren Vorderseite die Wendetrommel angeordnet ist. Das von der orthogonal zur Fahrtrichtung und damit zur Arbeitsrichtung der bekannten Umsetzvorrichtung angeordneten Wendetrommel erfaßte Rottgut wird auf ein sich in Längsrichtung und somit in Fahrtrichtung der bekannten Umsetzvorrichtung verlaufendes Förderband geworfen und am hinteren Ende der Umsetzvorrichtung wieder vom Förderband abgelegt.

Eine Umsetzvorrichtung mit den Merkmalen des Oberbegriffs des Anspruchs 1 ist aus der DE 43 40 612 C1 bekannt. Die in dieser Druckschrift beschriebene Vorrichtung zum Umsetzen von Kompostmieten weist eine orthogonal zur Fahrtrichtung und somit zur Arbeitsrichtung der Umsetzvorrichtung angeordnete Wendetrommel zum Aufnehmen und Hochschleudern des Rottguts auf. Das von der Wendetrommel erfaßte Rottgut der Kompostmiete wird entgegen der Arbeitsrichtung der Umsetzvorrichtung zu einer entgegen der Fahrtrichtung verlaufenden Fördereinrichtung transportiert und von dort auf ein quer zur Fahrtrichtung verlaufendes Transportband einer Austrageeinrichtung übergeben, das das umzusetzende Rottgut seitwärts transportiert, wo es dann in einer neuen Dreiecksmiete abgelegt wird.

Die aus der vorgenannten Druckschrift bekannte sowie die anderen bekannten Umsetzvorrichtungen besitzen den Nachteil, daß zwischen zwei benachbarten Kompostmieten immer ein Fahrweg für die Umsetzvorrichtung vorhanden sein muß, so daß es in nachteiliger Art und Weise nicht möglich ist, benachbarte Kompostmieten eng aneinander angrenzend zu positionieren. Desweiteren besitzen die bekannten Umsetzvorrichtungen zur Kompostwendung den Nachteil, daß aufgrund der in Fahrtrichtung ablaufenden Transportbewegung des Rottguts immer in nachteiliger Art und Weise ein Versatz des Rottguts in der Längsrichtung der Kompostmieten auftritt, da das Rottgut am vorderen Ende der bekannten Umsetzvorrichtung aufgenommen und an ihrem hinteren Ende abgelegt wird. Bedenkt man nun, daß im Verlauf des Verrottungsprozesses eine Kompostmiete mehrmals gewendet werden muß, bedeutet diese Längsversetzung des Rottguts in Richtung der Längserstreckung der Kompostmiete, daß bei der Anlage der Kompostmieten eine nicht zu unterschätzende Reservefläche freigehalten werden muß, um mit der bekannten Umsetzvorrichtung die Kompostwendung durchführen zu können.

Es ist daher Aufgabe der vorliegenden Erfindung, eine Umsetzvorrichtung der eingangs genannten Art derart weiterzubilden, daß eine Umsetzvorrichtung geschaffen wird, die eine platzsparende Anlage von Kompostmieten erlaubt.

Diese Aufgabe wird erfindungsgemäß dadurch gelöst, daß die Wendetrommel derart verschwenkt oder verschwenkbar ist, daß sie in einem spitzen Winkel zur Arbeitsrichtung der Umsetzvorrichtung angeordnet oder anstellbar ist, und daß die Fördereinrichtung der Umsetzvorrichtung hinter der Wendetrommel und quer zur Arbeitsrichtung der Umsetzvorrichtung angeordnet ist.

Durch die erfindungsgemäßen Maßnahmen wird in vorteilhafter Art und Weise eine Umsetzvorrichtung geschaffen, die sich dadurch auszeichnet, daß aufgrund der Schrägstellung der Wendetrommel zur Arbeitsrichtung der Umsetzvorrichtung in vorteilhafter Art und Weise erreicht wird, daß die Wendetrommel direkt in das Rottgut der zu bearbeitenden Kompostmiete eingreifen kann und sich somit direkt ihren Arbeitsbereich freischaufelt. Dies bewirkt in vorteilhafter Art und Weise, daß es nun nicht mehr erforderlich ist, daß zwischen benachbarten Kompostmieten Fahrspuren für die Umsetzvorrichtung freigehalten werden müssen. Benachbarte Kompostmieten können somit in vorteilhafter Art und Weise eng benachbart oder sogar überlappend angeordnet werden.

Ein weiterer Vorteil der erfindungsgemäßen Umsetzvorrichtung besteht darin, daß aufgrund der Schrägstellung der Wendetrommel und der quer verlaufenden Anordnung der Förder- und der Austrageeinrichtung - bei einer auf die gewählte Schrägstellung der Wendetrommel abgestimmten Vorschubbewegung der erfindungsgemäßen Umsetzvorrichtung in ihrer Arbeitsrichtung - das Rottgut im wesentlichen in dem Bereich abgelegt wird, in dem es auch aufgenommen wurde, so daß in vorteilhafter Art und Weise keine oder nur eine minimale Versetzung des Rottguts in Längsrichtung der Kompostmiete auftritt. Es ist somit mit der erfindungsgemäßen Umsetzvorrichtung möglich, den zur Anlage der Kompostmieten zur Verfügung stehenden Raum optimal auszunutzen, da es nun nicht mehr erforderlich ist, den bisher zum Wenden der Kompostmieten aufgrund der Längsversetzung benötigten Reserveraum vorzuhalten.

Die erfindungsgemäße Umsetzvorrichtung erlaubt daher in vorteilhafter Art und Weise die Anlage einer besonders raumsparenden Kompostmieten-Anlage.

Ein weiterer Vorteil der erfindungsgemäßen Maßnahmen besteht darin, daß es durch die erfindungsgemäße Ausbildung der Umsetzvorrichtung aufgrund der seitlich zur Wendetrommel erfolgenden Ablage des Rottguts auch möglich ist, eine Teilmenge des Rottguts von einer Kompostmiete auf die benachbarte Kompostmiete aufzusetzen und somit mit jedem Wendevorgang des Rottguts die einzelnen Kompostmieten auf ihre optimalen Mietengrößen zu formen.

Eine vorteilhafte Weiterbildung der Erfindung sieht vor, daß die erfindungsgemäße Umsetzvorrichtung nicht als selbstfahrende Maschine, sondern als an ein geeignetes Trägerfahrzeug, insbesondere einen Traktor, ansetzbare Vorrichtung ausgebildet ist. Eine derartige Maßnahme besitzt den Vorteil, daß eine derartige erfindungsgemäße Umsetzvorrichtung besonders kostengünstig in ihrer Herstellung ist.

Eine weitere vorteilhafte Weiterbildung der Erfindung sieht vor, daß die erfindungsgemäße Vorrichtung einen Anbaublock aufweist, über den sie an das Trägerfahrzeug anbaubar ist. Eine derartige Maßnahme besitzt den Vorteil einer besonders leichten Montierbarkeit der erfindungsgemäßen Vorrichtung an dem Trägerfahrzeug.

Eine weitere vorteilhafte Weiterbildung der Erfindung sieht vor, daß der an der Rückseite der erfindungsgemäßen Umsetzvorrichtung angeordnete Anbaublock für das Trägerfahrzeug von dieser an eine Seitenfläche der Umsetzvorrichtung verschwenkbar ist. Eine derartige Maßnahme besitzt den Vorteil, daß hierdurch besonders einfach die gesetzlich vorgeschriebene maximale Transportbreite erzielbar ist, da nach einem Verschwenken des Anbaublocks von der Rückseite an die Seitenfläche der erfindungsgemäßen Vorrichtung in Längsrichtung transportierbar ist.

Eine weitere vorteilhafte Weiterbildung der Erfindung sieht vor, daß über der Wendetrommel mindestens eine weitere Wende- und/oder Dosiertrommel angeordnet ist, deren Drehrichtung entgegengesetzt zur Drehrichtung der Wendetrommel orientiert ist. Eine derartige Maßnahme besitzt den Vorteil, daß hierdurch in vorteilhafter Art und Weise eine Umsetzvorrichtung ausgebildet ist, die sich durch eine hohe Verarbeitungsgeschwindigkeit auszeichnet, da durch die beiden gegenläufig rotierenden Trommeln eine große Menge von Rottgut aufnehmbar ist.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden anhand der Figuren beschrieben wird. Es zeigen:
- Figur 1: eine Vorderansicht eines Ausführungsbeispiels einer Umsetzvorrichtung,
- Figur 2: eine Seitenansicht des Ausführungsbeispiels,
- Figur 3: eine Draufsicht auf das Ausführungsbeispiel, und
- Figur 4: eine zweite Ausführungsform des Ausführungsbeispiels.

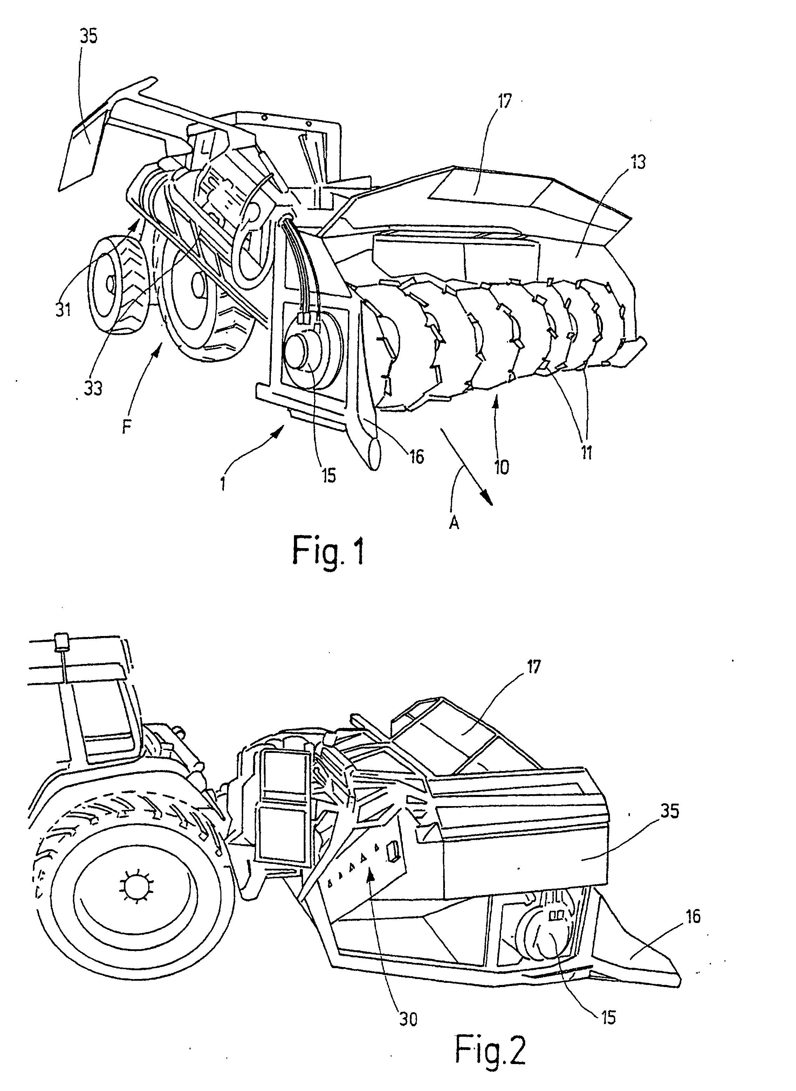

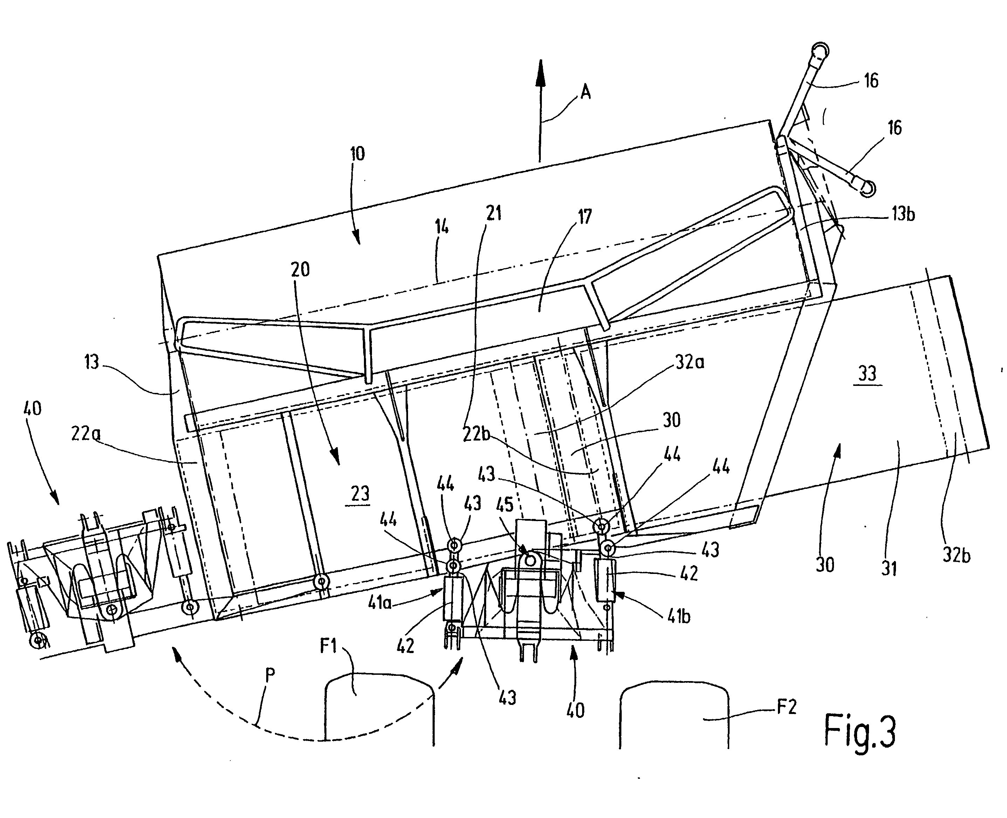

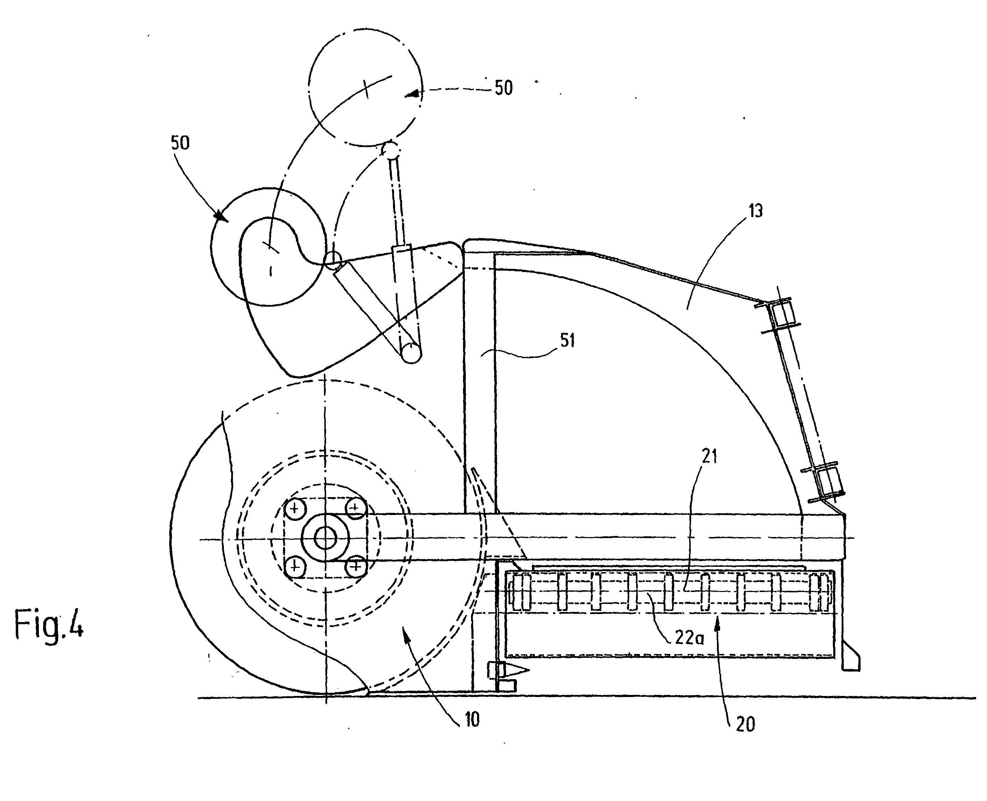

Die in den Figuren 1 bis 2 zusammen mit einem Trägerfahrzeug F dargestellte Umsetzvorrichtung 1 weist mindestens eine an und für sich bekannte und daher nicht mehr näher beschriebene Wendetrommel 10 mit Arbeitswerkzeugen 11 auf, die in einem nach vorne offenen Gehäuse 13 der Umsetzvorrichtung 1, das einen Schutzschirm 17 aufweist, mittels einer Welle 14 (s. Figur 3) gelagert und von einem Motor 15 angetrieben ist. Der Motor 15 ist vorzugsweise über Hydraulikoder Pneumatikleitungen mit einem entsprechenden Antriebsaggregat des Trägerfahrzeugs F verbunden. Über der Wendetrommel 10 kann optional noch mindestens eine weitere Wende- und/oder Dosiertrommel (siehe Figur 4) angeordnet sein.

Hierbei ist vorgesehen, daß - wie am besten aus der Figur 2 ersichtlich ist - die Wendetrommel 10 derart verschwenkt oder verschwenkbar am Trägerfahrzeug F angeordnet ist, daß sie beim Umsetzvorgang im spitzen Winkel zur Arbeitsrichtung A der Umsetzvorrichtung 1 angeordnet ist. Aufgrund dieser Schrägstellung der Wendetrommel 10 zur Arbeitsrichtung A der Umsetzvorrichtung 1 wird in vorteilhafter Art und Weise erreicht, daß die Wendetrommel 10 in das Rottgut der zu bearbeitenden Kompostmiete eingreifen kann und sich somit direkt ihren Arbeitsbereich freischaufelt. Es ist daher bei der beschriebenen Umsetzvorrichtung 1 in vorteilhafter Art und Weise nicht mehr erforderlich, daß zwischen benachbarten Kompostmieten Fahrspuren für die Umsetzvorrichtung 1 freigehalten werden müssen, sondern benachbarte Kompostmieten können in vorteilhafter Art und Weise eng zueinander benachbart oder sogar überlappend angeordnet werden.

Wie am besten aus den Figuren 2 und 3 ersichtlich ist, ist hinter der Wendetrommel 10 eine quer zur Arbeitsrichtung A angeordnete Fördereinrichtung 20 vorgesehen, die in dem hier gezeigten Fall als ein Bandförderer 21 mit einem Förderband 23 ausgebildet ist, welches über zwei Umlenkwalzen 22a, 22b, von denen mindestens eine, vorzugsweise aber beide angetrieben sind, geführt ist. Das von der Wendetrommel 10 von der zu bearbeitenden Kompostmiete aufgenommene Rottgut wird von der Fördereinrichtung 20 zu einer Austrageeinrichtung 30 geleitet, welche ebenfalls quer zur Arbeitsrichtung A der Umsetzvorrichtung 1 angeordnet ist. Im hier gezeigten Fall ist die Austrageeinrichtung 30 ebenfalls als ein Bandförderer 31 mit einem Förderband 33 ausgebildet, welches wiederum über zwei Umlenkwalzen 32a, 32b geführt ist, von denen wiederum mindestens eine angetrieben ist. Der in Figur 3 linke Endbereich 30' der Austrageeinrichtung 30 ist unter der quer verlaufenden Fördereinrichtung 20 angeordnet, so daß das Rottgut von der Fördereinrichtung 20 auf die Austrageeinrichtung 30 geworfen und dann von der Austrageeinrichtung 30 an ihrem vorzugsweise ein verstellbares Prallblech 35 aufweisenden Austrageende abgelegt wird.

Vorzugsweise wird hierbei die Vorschubbewegung der Umsetzvorrichtung 1 in ihrer Arbeitsrichtung A auf die gewählte Schrägstellung der Wendetrommel 10 derart abgestimmt, daß das Rottgut im wesentlichen in dem Bereich abgelegt wird, in dem es auch aufgenommen wurde, so daß in vorteilhafter Art und Weise keine oder nur eine minimale Versetzung des Rottguts in Längsrichtung der Kompostmiete auftritt. Es ist somit bei der beschriebenen Umsetzvorrichtung 1 in vorteilhafter Art und Weise möglich, den zur Anlage der Kompostmieten zur Verfügung stehenden Raum optimal auszunutzen, da es nun nicht mehr erforderlich ist, den bisher zum Wenden der Kompostmieten aufgrund der Längsversetzung benötigten Reserveraum vorzuhalten. Die beschriebene Umsetzvorrichtung 1 erlaubt daher in vorteilhafter Art und Weise die Anlage einer besonders raumsparenden Kompostmieten-Anlage.

Aufgrund der Ausbildung der Umsetzvorrichtung 1 mit der seitlich zur Wendetrommel 10 erfolgenden Ablage des Rottguts ist es auch in vorteilhafter Art und Weise möglich, eine Teilmenge des Rottguts von einer Kompostmiete auf die benachbarte Kompostmiete aufzusetzen und somit mit jedem Wendevorgang des Rottguts die einzelnen Kompostmieten auf ihre optimalen Mietengrößen zu formen. Hierzu ist es vorteilhaft, daß - wie am besten aus Figur 2 ersichtlich ist - die Austrageeinrichtung 30 schräg nach oben verlaufend angeordnet ist. Vorzugsweise ist vorgesehen, daß der Neigungswinkel der Austrageeinrichtung 30 verstellbar ist, so daß der seitliche Abstand der Ablage des Rottguts zur Umsetzvorrichtung 1 leicht variierbar ist, indem die Austrageeinrichtung 30 steiler oder flacher positioniert wird.

An dieser Stelle soll noch angeführt werden, daß bei der obigen Beschreibung davon ausgegangen wurde, daß die Fördereinrichtung 20 und die Austrageeinrichtung 30, die vorzugsweise jeweils als Bandförderer 21, 31 ausgebildet sind, zwei separate Bauteile sind. Es ist natürlich auch möglich, daß die Fördereinrichtung 20 und die Austrageeinrichtung 30 in einer einzigen Einrichtung kombiniert sind, wie z. B. bei einem Bandförderer, dessen Förderband sich von der in Figur 3 linken Umlenkwalze 22a bis zu der Umlenkwalze 32b erstreckt.

An ihrer Rückseite weist die Umsetzvorrichtung 1 einen an und für sich bekannten und daher nicht näher beschriebenen Anbaublock 40 auf, über den sie am Trägerfahrzeug F, von dem in Figur 3 nur schematisch Vorderräder F1 und F2 dargestellt sind, angebaut werden kann. Der Anbaublock 40 weist eine gelagerte Halteeinrichtung 45 auf, die lösbar mit dem rückwärtigen Teil des Gehäuses 13 verbunden ist und in dieses eingreift, um derart die Umsetzvorrichtung 1 zu tragen und schwenkbar zu machen. Geschwenkt wird die gesamte Umsetzvorrichtung 1 mit zwei Zylindern 42 mit darin verschieblich aufgenommenen Kolben 43, die an ihrem Ende Verschlußeinrichtungen 44, insbesondere Schnellkupplungen, tragen. Die Zylinder 42 dienen dazu, den Anstellwinkel der Umsetzvorrichtung 1 zur Arbeitsrichtung A zu verändern. Soll die Umsetzvorrichtung 1 steiler als in Figur 3 gezeigt zur Arbeitsrichtung A angeordnet werden, so werden die in Figur 3 rechten Kolben 43 vorgeschoben. Soll jedoch der Anstellwinkel verkleinert werden, so werden die in Figur 3 linken Kolben 43 nach vorne bewegt.

Vorzugsweise ist vorgesehen, daß der Anbaublock 40 verschwenkbar am Gehäuse 13 der Umsetzvorrichtung 1 angeordnet ist, so daß nach dem Lösen der Verschlußeinrichtungen 44, über die der Anbaublock 40 mit dem Gehäuse 13 lösbar verbunden ist, diese - wie in Figur 3 gezeigt und durch den schraffierten Doppelpfeil P angedeutet - von der Rückseite der Umsetzvorrichtung 1 zu deren linken Seite hin verschwenkt werden kann. Durch eine derartige Maßnahme wird die Bautiefe der Umsetzvorrichtung 1 verkleinert, so daß die Umsetzvorrichtung 1 eine den gesetzlichen Transportvorschriften entsprechende Breite aufweist. An einer Seitenfläche 13b des Gehäuses 13 ist ein Leitelement 16 angeordnet, welches verschwenkbar ausgebildet ist. Das Leitelement 16 dient bei der Bearbeitung einer Kompostmiete dazu, den rechten Einzugsbereich der Wendetrommel 10 entsprechend zu räumen. Zum Transport der Umsetzvorrichtung 1 ist wiederum vorgesehen, daß zur Reduzierung der Größe der Umsetzvorrichtung 1 das Leitelement 16 von seiner in Figur 3 gezeigten, vorderen Stellung in die nach hinten zurückgeklappte Stellung 16' verschwenkbar ist.

In Figur 4 ist nun eine zweite Ausführungsform der Umsetzvorrichtung 1 dargestellt, welche sich von der in den Figuren 1 bis 3 dargestellten Umsetzvorrichtung 1 dadurch unterscheidet, daß - wie bereits eingangs kurz erwähnt - über der Wendetrommel 10 eine weitere Wende- und/oder Dosiertrommel 50 angeordnet ist, welche gegenläufig zur Wendetrommel 10 rotiert. Durch die beiden Trommeln 10, 50 wird eine Umsetzvorrichtung 1 ausgebildet, welche sich durch eine hohe Förderleistung und somit eine hohe Arbeitsgeschwindigkeit auszeichnet. Hierbei wird bevorzugt, daß die weitere Trommel 50 - wie in Figur 4 gezeigt - schwenkbar an einem entsprechenden Träger 51 angelenkt ist, so daß einerseits der Abstand zwischen den beiden Trommel 10, 50 variierbar und andererseits die weitere Trommel 50 aus ihrer der Wendetrommel 10 benachbarten Arbeitsstellung in eine in der Figur 4 strichliert gezeigte Ruhestellung verschwenkbar ist, so daß weiterhin ein Betrieb der Umsetzvorrichtung 1 nur mit der Wendetrommel 10 möglich ist.

## Patentansprüche

1. Umsetzvorrichtung für Rottgut einer Kompostmiete, insbesondere für eine Dreiecks- oder Trapezmiete, die mindestens eine Wendetrommel (10) aufweist, durch die das Rottgut der Kompostmiete erfaßbar und entgegen einer Arbeitsrichtung (A) der Umsetzvorrichtung (1) zu einer Fördereinrichtung (20) transportierbar ist, durch die das Rottgut zu einer quer zur Arbeitsrichtung (A) der Umsetzvorrichtung (1) arbeitenden Austrageeinrichtung (30) transportierbar ist, **dadurch gekennzeichnet, daß** die Wendetrommel (10) derart verschwenkt oder verschwenkbar ist, daß sie in einem spitzen Winkel zur Arbeitsrichtung (A) der Umsetzvorrichtung (1) angeordnet oder anstellbar ist, und daß die Fördereinrichtung (20) der Umsetzvorrichtung (1) hinter der Wendetrommel (10) und quer zur Arbeitsrichtung (A) der Umsetzvorrichtung ( 1 ) angeordnet ist.

2. Umsetzvorrichtung nach Anspruch 1, **dadurch gekennzeichnet, daß** die Wendetrommel (10) auf einer in einem Gehäuse (13) der Umsetzvorrichtung (1) gelagerten, angetriebenen Welle (14) angeordnet ist, und daß die Fördereinrichtung (20) im wesentlichen parallel zur Welle (14) der Wendetrommel (10) angeordnet ist.

3. Umsetzvorrichtung nach einem der vorangehenden Ansprüche, **dadurch gekennzeichnet, daß** die Fördereinrichtung (20) als ein Bandförderer (21) ausgebildet ist, der ein über zwei Umlenkwalzen (22a, 22b) geführtes Förderband (23) aufweist.

4. Umsetzvorrichtung nach einem der vorangehenden Ansprüche, **dadurch gekennzeichnet, daß** die Austrageeinrichtung (30) im wesentlichen parallel zur Welle (14) der Wendetrommel (10) angeordnet ist.

5. Umsetzvorrichtung nach einem der vorangehenden Ansprüche, **dadurch gekennzeichnet, daß** die Austrageeinrichtung (30) als ein Bandförderer (31) mit einem Förderband (33) und zwei Umlenkwalzen (32a, 32b) ausgebildet ist, und daß das in Förderrichtung vordere Ende der Fördereinrichtung (20) über dem hinteren Bereich (30') der Austrageeinrichtung (30) angeordnet ist, so daß das von der Wendetrommel (10) erfaßte und zur Fördereinrichtung (20) transportierte Rottgut von der Fördereinrichtung (20) auf die Austrageeinrichtung (30) werfbar ist.

6. Umsetzvorrichtung nach einem der vorangehenden Ansprüche, **dadurch gekennzeichnet, daß** die Fördereinrichtung (20) und die Austrageeinrichtung (30) als Bestandteile einer kombinierten Förder-Austrageeinrichtung ausgebildet sind.

7. Umsetzvorrichtung nach einem der vorangehenden Ansprüche, **dadurch gekennzeichnet, daß** die Austrageeinrichtung (30) schräg nach oben verlaufend angeordnet ist, und daß der Neigungswinkel der Austrageeinrichtung (30) verstellbar ist.

8. Umsetzvorrichtung nach einem der vorangehenden Ansprüche, **dadurch gekennzeichnet, daß** die Umsetzvorrichtung (1) einen Anbaublock (40) aufweist, über den sie an einem Trägerfahrzeug (F) befestigbar ist.

9. Umsetzvorrichtung nach einem der vorangehenden Ansprüche, **dadurch gekennzeichnet, daß** der Anbaublock (40) eine Halteeinrichtung (45) aufweist, die mit dem Gehäuse (13) der Umsetzvorrichtung (1) verbunden ist, um derart die Umsetzvorrichtung (1) zu tragen, und dadurch die mindestens eine Wendetrommel (10) in ihrem Anstellwinkel zur Arbeitsrichtung (A) der Umsetzvorrichtung (1) veränderlich zu machen.

10. Umsetzvorrichtung nach Anspruch 9, **dadurch gekennzeichnet, daß** die Halteeinrichtung (45) mindestens einen Zylinder (42) mit mindestens einem darin verschieblich gelagerten Kolben (43) aufweist, an dessen einem Ende eine Verschlußeinrichtung (44) angeordnet ist.

11. Umsetzvorrichtung nach einem der vorangehenden Ansprüche, **dadurch gekennzeichnet, daß** der Anbaublock (40) derart verschwenkbar mit dem Gehäuse (13) der Umsetzvorrichtung (1 ) verbunden ist, daß er von der Rückseite der Umsetzvorrichtung (1) wegbewegbar ist.

12. Umsetzvorrichtung nach einem der vorangehenden Ansprüche, **dadurch gekennzeichnet, daß** an einer Seitenfläche (13b) des Gehäuses (13) ein - vorzugsweise verschwenkbares - Leitelement (16) angeordnet ist.

13. Umsetzvorrichtung nach einem der vorangehenden Ansprüche, **dadurch gekennzeichnet, daß** über der Wendetrommel (10) mindestens eine weitere Trommel (50), insbesondere eine Wende- oder Dosiertrommel, angeordnet ist.

14. Umsetzvorrichtung nach Anspruch 13, **dadurch gekennzeichnet, daß** die weitere Trommel (50) gegenläufig zur Wendetrommel (10) rotiert, und/oder daß die weitere Trommel (50) in ihrem Abstand veränderbar zur Wendetrommel (10) angeordnet ist, und/oder daß die weitere Trommel (50) schwenkbar in der Umsetzvorrichtung (1) angeordnet ist.

15. Umsetzvorrichtung nach einem der vorangehenden Ansprüche, **dadurch gekennzeichnet, daß** das Gehäuse (13) über der Wendetrommel (10) einen Schutzschirm (17) aufweist.

16. Umsetzvorrichtung nach einem der vorangehenden Ansprüche, **dadurch gekennzeichnet, daß** über dem Austrageende der Austrageeinrichtung (30) ein Prallblech (35) angeordnet ist.

17. Verwendung einer Umsetzvorrichtung nach einem der Ansprüche 1-16 in.einer Umsetzmaschine.

## Claims

1. Transfer device for compost of a compost stack, in particular for a triangular or trapezoid stack, which device has at least one turning drum (10) which can pick up the compost of a compost stack and transport this against a working direction (A) of the transfer device (1 ) to a conveyor device (20) which can transport the compost to an output device (30) working transverse to the working direction (A) of the transfer device (1 ), **characterised in that** the turning drum (10) is or can be swivelled such that it is arranged or can be placed at an acute angle to the working direction (A) of the transfer device (1 ) and that the conveyor device (20) of the transfer device (1 ) is arranged behind the turning drum (10) and transverse to the working direction (A) of the transfer device (1).

2. Transfer device according to claim 1, **characterised in that** the turning drum (10) is arranged on a driven shaft (14) mounted in a housing (13) of the transfer device (1 ) and that the conveyor device (20) is arranged essentially parallel to the shaft (14) of the turning drum (10).

3. Transfer device according to any of the previous claims, **characterised in that** the conveyor device (20) is formed as a belt conveyor (21) which has a conveyor belt (23) guided over two deflector rollers (22a, 22b).

4. Transfer device according to any of the previous claims, **characterised in that** the output device (30) is arranged essentially parallel to the shaft (14) of the turning drum (10).

5. Transfer device according to any of the previous claims, **characterised in that** the output device (30) is formed as a belt conveyor (31 ) with a conveyor belt (33) and two deflector rollers (32a, 32b), and that the front end of the conveyor device (20) in the conveyor direction is arranged above the rear area (30') of the output device (30) so that the compost picked up by the turning drum (10) and transported to the conveyor device (20) can be thrown onto the output device (30) by the conveyor device (20).

6. Transfer device according to any of the previous claims, **characterised in that** the conveyor device (20) and the output device (30) can be formed as components of a combined conveyor-output device.

7. Transfer device according to any of the previous claims, **characterised in that** the output device (30) is arranged running obliquely upwards and that the incline angle of the output device (30) is adjustable.

8. Transfer device according to any of the previous claims, **characterised in that** the transfer device (1 ) has an attachment block (40) via which it can be attached to a carrier vehicle (F).

9. Transfer device according to any of the previous claims, **characterised in that** the attachment block (40) has a holder device (45) which is connected with the housing (13) of the transfer device (1 ) in order thus to carry the transfer device (1 ) and hence make the at least one turning drum (10) adjustable in its angle of attack to the working direction (A) of the transfer device (1).

10. Transfer device according to claim 9, **characterised in that** the holder device (45) has at least one cylinder (42) with at least one piston (43) mounted displaceably therein, at the one end of which is arranged a locking device (44).

11. Transfer device according to any of the previous claims, **characterised in that** the attachment block (40) is connected swivellably with the housing (13) of the transfer device (1 ) such that it can be moved away from the rear of the transfer device (1).

12. Transfer device according to any of the previous claims, **characterised in that** on one side surface (13b) of the housing (13) is arranged a preferably swivellable guide element (16).

13. Transfer device according to any of the previous claims, **characterised in that** arranged above the turning drum (10) is at least one further drum (50), in particular a turning or metering drum,

14. Transfer device according to claim 13, **characterised in that** the further drum (50) rotates in the opposite direction to the turning drum (10) and/or that the further drum (50) is arranged adjustable in its spacing from the turning drum (10) and/or that the further drum (50) is arranged swivellable in the transfer device (1).

15. Transfer device according to any of the previous claims, **characterised in that** the housing (13) has a protective screen (17) above the turning drum (10).

16. Transfer device according to any of the previous claims, **characterised in that** above the deposit end of the output device (30) is arranged a deflector plate (35).

17. Use of a transfer device according to any of claims 1 to 16 in a transfer machine.

## Revendications

1. Dispositif de déplacement pour de la matière en cours de putréfaction d'une meule de compost, en particulier pour une meule triangulaire ou trapézoïdale, qui présente au moins un tambour de dégagement (10) par lequel la matière en cours de putréfaction de la meule de compost peut être saisie et peut être transportée, à l'encontre de la direction de travail (A) du dispositif de déplacement (1), en direction d'un mécanisme de transport (20), **caractérisé en ce que** le tambour de dégagement (10) pivote ou est à même de pivoter de telle sorte qu'il est disposé ou qu'il peut être réglé en formant un angle aigu par rapport à la direction de travail (A) du dispositif de déplacement (1), et **en ce que** le mécanisme de transport (20) du dispositif de déplacement (1) est disposé derrière le tambour de dégagement (10) et transversalement par rapport à la direction de travail (A) du dispositif de déplacement (1).

2. Dispositif de déplacement selon la revendication 1, **caractérisé en ce que** le tambour de dégagement (10) est disposé sur un arbre entraîné (14) monté dans un carter (13) du dispositif de déplacement (1) et **en ce que** la direction de transport (20) est disposée essentiellement parallèlement à l'arbre (14) du tambour de dégagement (10).

3. Dispositif de déplacement selon l'une quelconque des revendications précédentes, **caractérisé en ce que** le mécanisme de transport (20) est réalisé sous la forme d'un transporteur à bande (21) qui présente une bande transporteuse (23) guidée par-dessus deux rouleaux de renvoi (22a, 22b).

4. Dispositif de déplacement selon l'une quelconque des revendications précédentes, **caractérisé en ce que** le mécanisme d'évacuation (30) est disposé essentiellement parallèlement à l'arbre (14) du tambour de dégagement (10).

5. Dispositif de déplacement selon l'une quelconque des revendications précédentes, **caractérisé en ce que** le mécanisme d'évacuation (30) est réalisé sous la forme d'un transporteur à bande (31) comprenant une bande transporteuse (33) et deux rouleaux de renvoi (32a, 32b), et **en ce que** l'extrémité antérieure du mécanisme de transport (20) dans le dispositif de transport est disposée au-delà de la zone arrière (30') du mécanisme d'évacuation (30), si bien que la matière en cours de putréfaction saisie par le tambour de dégagement (10) et transportée en direction du mécanisme de transport (20) peut être projetée par le mécanisme de transport (20) sur le mécanisme d'évacuation (30).

6. Dispositif de déplacement selon l'une quelconque des revendications précédentes, **caractérisé en ce que** le mécanisme de transport (20) et le mécanisme d'évacuation (30) sont réalisés sous la forme de constituants d'un mécanisme combiné de transport-évacuation.

7. Dispositif de déplacement selon l'une quelconque des revendications précédentes, **caractérisé en ce que** le mécanisme d'évacuation (30) est disposé de telle sorte qu'il s'étend en inclinaison vers le haut et **en ce que** l'angle d'inclinaison du dispositif d'évacuation (30) est réglable.

8. Dispositif de déplacement selon l'une quelconque des revendications précédentes, **caractérisé en ce que** le dispositif de déplacement (1) présente une pièce rapportée (40) par laquelle il peut être fixé à un véhicule de support (F).

9. Dispositif de déplacement selon l'une quelconque des revendications précédentes, **caractérisé en ce que** la pièce rapportée (40) présente un mécanisme d'arrêt (45) qui est relié au carter (13) du dispositif de déplacement (1) pour de cette manière porter le dispositif de déplacement (1) et ainsi rendre modifiable ledit au moins un tambour de dégagement (10) en ce qui concerne son angle de réglage par rapport à la direction de travail du dispositif de déplacement (1).

10. Dispositif de déplacement selon la revendication 9, **caractérisé en ce que** le mécanisme d'arrêt (45) présente au moins un cylindre (42) comprenant un piston (43) monté en coulissement dans le premier cité, piston à une extrémité duquel est disposé un mécanisme de fermeture (44).

11. Dispositif de déplacement selon l'une quelconque des revendications précédentes, **caractérisé en ce que** la pièce rapportée (40) est reliée en pivotement au carter (13) du dispositif de déplacement (1) de telle sorte qu'elle est à même de se déplacer à l'écart du côté dorsal du dispositif de déplacement (1).

12. Dispositif de déplacement selon l'une quelconque des revendications précédentes, **caractérisé en ce qu'**un élément de guidage (16) - de préférence apte à pivoter-est disposé contre une surface latérale (13a) du carter (13).

13. Dispositif de déplacement selon l'une quelconque des revendications précédentes, **caractérisé en ce qu'**au moins un tambour supplémentaire (51), en particulier un tambour de dégagement ou un tambour de dosage, est disposé par-dessus le tambour de dégagement (10).

14. Dispositif de déplacement selon la revendication 13, **caractérisé en ce que** le tambour supplémentaire (50) tourne dans le sens contraire de celui du tambour de dégagement (10), et/ou **en ce que** le tambour supplémentaire (50) est disposé de telle sorte que sa distance par rapport au tambour de dégagement (10) peut être modifiée, et/ou **en ce que** le tambour supplémentaire (50) est disposé en pivotement dans le dispositif de déplacement (1).

15. Dispositif de déplacement selon l'une quelconque des revendications précédentes, **caractérisé en ce que** le carter (13) présente une protection (17) au-dessus du tambour de dégagement (10).

16. Dispositif de déplacement selon l'une quelconque des revendications précédentes, **caractérisé en ce qu'**une tôle de rebondissement (35) est disposée par-dessus l'extrémité d'évacuation du mécanisme (30). destiné à cet effet.

17. Utilisation d'un dispositif de déplacement selon l'une quelconque des revendications 1 à 16 dans une machine de déplacement.
